# EUROPÄISCHE PATENTSCHRIFT

(11) **EP 1 512 254 B1**
(45) Veröffentlichungstag und Bekanntmachung des Hinweises auf die Patenterteilung: **05.10.2005**
(21) Anmeldenummer: 03735139.2
(22) Anmeldetag: 04.06.2003
(51) Int. Cl.: H04L 12/64, H04L 12/44, H04J 3/06

(54) **KOMMUNIKATIONSVERFAHREN UND SYSTEM ZUR ÜBERTRAGUNG VON ZEITGESTEUERTEN UND EREIGNISGESTEUERTEN ETHERNET-NACHRICHTEN**
COMMUNICATION METHOD AND SYSTEM FOR TRANSMITTING TIMED AND EVENT-DRIVEN ETHERNET MESSAGES
PROCEDE DE COMMUNICATION ET SYSTEME POUR TRANSMETTRE DES MESSAGES ETHERNET A COMMANDE TEMPORELLE ET EVENEMENTIELLE

(30) Priorität: 13.06.2002 AT 8952002
(43) Veröffentlichungstag der Anmeldung: 09.03.2005
(73) Patentinhaber: FTS Computertechnik Ges.mbH, 2500 Baden bei Wien (AT)
(72) Erfinder: KOPETZ, Hermann, A-2500 Baden bei Wien (AT)
(74) Vertreter: Patentanwaltskanzlei Matschnig
(86) Internationale Anmeldenummer: PCT/AT2003/000164
(87) Internationale Veröffentlichungsnummer: WO 2003/107609

(56) Entgegenhaltungen:
- EP-A- 0 596 650
- WO-A-01/95550
- WO-A-01/95562
- US-A- 6 141 355

## Beschreibung

Die Erfindung betrifft ein Kommunikationsverfahren zur Übertragung von Ethernet-Nachrichten in einem verteilten Echtzeitsystem, in dem eine Vielzahl von Knotenrechnern, z.B. vier Knotenrechner, die über mindestens je einen Kommunikationskontroller verfügen, die über ein Kommunikationssystem bestehend aus einem oder mehreren Kommunikationskanälen verbunden sind, wobei in jedem Kommunikationskanal ein oder mehrere intelligente Sternkoppler angeordnet sind, und wobei zwischen herkömmlichen Ethernet-Nachrichten (ET-Nachrichten) und zeitgesteuerten Ethernet-Nachrichten (TT-Nachrichten) unterschieden wird, und die TT-Nachrichten mit einer a priori bekannten konstanten Verzögerungszeit zwischen Sender und Empfänger transportiert werden.

Ein solches Verfahren ist aus der WO 01/095550 A bekannt.

Weiters betrifft die Erfindung einen Sternkoppler für ein Kommunikationssystem zur Übertragung von Ethernet-Nachrichten in einem verteilten Echtzeitsystem umfassend eine Vielzahl von Knotenrechnern, z.B. vier Knotenrechner, die über mindestens je einen Kommunikationskontroller verfügen, wobei das Kommunikationssystem aus einem oder mehreren Kommunikationskanälen besteht, über welche die Knotenrechner miteinander verbunden sind, und wobei in jedem Kommunikationskanal ein oder mehrere intelligente Sternkoppler angeordnet sind.

Im weiteren Text wird auf die untenstehend angegebene Literatur verwiesen:
[1] US5694542
[2] EP 0 658 257
[3] US5887143
[4] AT 407 582
[5] AT 408 383
[6] Österreichische Patentanmeldung 1723/2001 "Verfahren zur Tolerierung von slightly-offspecification Fehlem in einem verteilten fehlertoleranten Echtzeitsystem." angemeldet am 10.10.2000
[7] Österreichische Patentanmeldung 429/2001 "Kommunikationsverfahren zur Realisierung von Ereigniskanälen in einem zeitgesteuerten Kommunikationssystem." angemeldet am 19.3.2001
[8] IEEE Ethernet Standard 802.3 at URL: http://standards.ieee.org
[9] Kopetz, H. (1997). Real-Time Systems, Design Principles for Distributed Embedded Applications; ISBN: 0-7923-9894-7. Boston. Kluwer Academic Publishers
[10] Sharon, O., Spratt, M., "A CSMA/CD compatible MAC for real-time transmission based on varying collision intervals". In: INFCOM '98, Seventh Annual Meeting Joint Conference of the IEEE Computer and Communications Societies, Proceedings. IEEE, Volume: 3, 1998, Seiten 1265-1272 vol. 3.

In den vergangen zwanzig Jahren hat sich der IEEE Ethernet Standard 802.3 [8] so weit durchgesetzt, dass aufgrund des vorhandenen Massenmarktes für Ethernet Controller im Personal Computer Bereich die Kosten für Ethernet basierte Kommunikationssysteme sehr stark gesunken sind. Aus diesen Kostengründen wird Ethernet auch zunehmend in der Echtzeitdatenverarbeitung eingesetzt, obwohl das vorhandene Ethernetprotokoll keine guten Echtzeiteigenschaften, wie minimaler Jitter, besitzt.

Aus [10] ist ein CSMS/CD-System bekannt, bei dem Nachrichten in solche niedriger und hoher Priorität unterteilt werden, wobei bei einem Konflikt zweier Nachrichten jener Nachricht mit hoher Priorität der Vorzug gegeben wird.

Mit der hier vorgeschlagenen Vorgangsweise alleine lassen sich allerdings die Echtzeiteigenschaften des Ethernetprotokolls nicht wesentlich verbessern.

Es ist eine Aufgabe der Erfindung, die Übertragung von Ethernet-Nachrichten mit guten Echtzeit-Eigenschaften zu ermöglichen.

Diese Aufgabe wird mit einem eingangs erwähnten Verfahren dadurch gelöst, dass erfindungsgemäß bei einem zeitlichen Konflikt zwischen ET- und TT-Nachrichten der Transport der in Konflikt stehenden ET-Nachricht abgebrochen wird, um die TT-Nachricht mit der konstanten Verzögerungszeit transportieren zu können.

Weiters wird die eingangs erwähnte Aufgabe mit einem eingangs erwähnten Sternkoppler gelöat, der erfindungsgemäß dazu eingerichtet ist, zwischen herkömmlichen Ethernet-Nachrichten (ET-Nachrichten) und zeitgesteuerten Ethernet-Nachrichten (TT-Nachrichten) zu unterscheiden, die TT-Nachrichten mit einer a priori bekannten konstanten Verzögerungszeit zwischen Sender und Empfänger zu transportieren, wobei bei einem zeitlichen Konflikt zwischen ET- und TT-Nachrichten der Transport der in Konflikt stehenden ET-Nachricht abgebrochen wird, um die TT-Nachricht mit der konstanten Verzögerungszeit transportieren zu können.

Im Gegensatz zu der in [10] geoffenbarten "non pre-emptive" Lösung muss bei der vorliegenden Erfindung nicht das Ende des Sendens einer Nachricht mit niedriger Priorität abgewartet werden, sondern es wird die Nachricht niedriger Priorität abgebrochen, um die Nachricht hoher Priorität senden zu können ("pre-emptive"). Dadurch ist es auch nicht notwendig, die maximale Laufzeit von Nachrichten mit niedriger Priorität abzuwarten, und die konstante Latenz kann somit auch kurz gehalten werden.

Auch in der WO 01/095550 A wird eine solche erfindungsgemäße Lösung nicht gezeigt, dort wird bei einem zeitlichen Konflikt zwischen ET- und TT-Nachrichten der Transport der in Konflikt stehenden ET-Nachricht lediglich verzögert.

Durch das Garantieren einer konstanten Verzögerungszeit kann eine hohe regelungstechnische Genauigkeit erreicht werden. Die konstante Verzögerungszeit ist dabei aus dem Grund von besonderer Bedeutung, da wie aus der Theorie der Uhrensynchronisation bekannt ist, die Variabilität der Verzögerungszeit (das ist die Differenz zwischen der maximalen und der minimalen Verzögerungszeit) die Genauigkeit der Uhrensynchronisation verschlechtert. Eine a priori bekannte konstante Verzögerungszeit kann im Uhrensynchronisationsalgorithmus berücksichtigt werden und hat daher keinen Einfluss auf die Genauigkeit der Uhrensynchronisation. Eine ungenaue Uhrensynchronisation führt zu einer schlechten Zeitbasis, da die Granularität der globalen Zeit größer sein muss als die Genauigkeit der Uhrensynchronisation. Eine grobe Granularität der Uhren führt zu einer ungenauen zeitlichen Auflösung von Ereignissen. Weiters bestimmt die Variabilität der Verzögerungszeit auch die Genauigkeit der Synchronisation verteilter Aktionen in einem verteilten Computersystem.

Die vorliegende Erfindung ermöglicht es, die Echtzeiteigenschaften eines auf Ethernet Nachrichten aufbauenden Kommunikationssystems wesentlich zu verbessern. Dieses neue Kommunikationssystem unterstützt den Parallelbetrieb von ereignisgesteuerten und zeitgesteuerten Ethernet-Nachrichten in einem einzigen Kommunikationssystem. Im folgenden werden die klassischen Ethernet-Nachrichten als ET-(event-triggered) Nachrichten und die zeitgesteuerten Ethernet-Nachrichten als TT-(time-triggered) Nachrichten bezeichnet. Die TT-Nachrichten haben eine konstante Verzögerungszeit und minimalen Jitter.

Durch die Erfindung ergeben sich folgende signifikante wirtschaftliche Vorteile. Der minimale Jitter der TT-Nachrichten ermöglicht den Aufbau von Regelkreisen von hoher regelungstechnischer Qualität. Die TT-Nachrichten ermöglichen den Aufbau einer globalen Zeit mit guter Präzision. Die globale Zeit unterstützt die Generierung genauer lokaler Zeitstem pel in der Datenerfassung und ermöglicht es, die temporale Spezifikation der Schnittstellen zu verbessern. Außerdem können herkömmliche Ethernet-Controller ohne Änderungen eingesetzt werden.

Das erfindungsgemäße Verfahren lässt sich besonders einfach realisieren, wenn die konstante Verzögerungszeit so gewählt wird, dass innerhalb dieser Verzögerungszeit die Ausgangskanäle des Sternkopplers für den Transport der eintreffenden TT-Nachricht frei gemacht werden können.

Bei einer Ausführungsform ist in einem ausgezeichneten Feld der Nachricht gekennzeichnet, ob die Nachricht eine TT-Nachricht oder eine ET-Nachricht ist.

Weiters kann in einer TT-Nachricht ein optionales Zeitfeld enthalten sein, das den SendeZeitpunkt der Nachricht angibt.

Von Vorteil ist es dabei, wenn bereits durch eine a priori Planung festgelegt wird, dass zwischen dem Transport von zwei TT-Nachrichten ein zeitlicher Abstand von mindestens der konstanten Verzögerungszeit eingehalten wird.

Weiters wird die oben erwähnte Aufgabe mit einem eingangs erwähnten System gelöst, welches erfindungsgemäß dazu eingerichtet ist, zwischen herkömmlichen Ethernet-Nachrichten (ET-Nachrichten) und zeitgesteuerten Ethernet-Nachrichten (TT-Nachrichten) zu unterscheiden und die TT-Nachrichten mit einer a priori bekannten konstanten Verzögerungszeit zwischen Sender und Empfänger zu transportieren, wobei bei einem zeitlichen Konflikt zwischen ET- und TT-Nachrichten der Transport der in Konflikt stehenden ET-Nachricht abgebrochen wird, um die TT-Nachricht mit der konstanten Verzögerungszeit transportieren zu können.

Wie bereits oben erwähnt, ist es von Vorteil, wenn die konstante Verzögerungszeit so gewählt ist, dass innerhalb dieser Verzögerungszeit die Ausgangskanäle des Stemkopplers für den Transport der eintreffenden TT-Nachricht frei gemacht werden können.

Außerdem kann vorgesehen sein, dass in einem ausgezeichneten Feld der Nachricht gekennzeichnet ist, ob die Nachricht eine TT-Nachricht oder eine ET-Nachricht ist.

Weiters kann in einer TT-Nachricht ein optionales Zeitfeld enthalten sein, das den Sendezeitpunkt der Nachricht angibt.

Von Vorteil ist es dabei, wenn bereits durch eine a priori Planung festgelegt ist, dass zwischen dem Transport von zwei TT-Nachrichten ein zeitlicher Abstand von mindestens der konstanten Verzögerungszeit eingehalten wird.

Bei einer konkreten Ausführungsform des Kommunikationssystems ist vorgesehen, dass dem Sternkoppler über eine Konfigurationsnachricht bekannt geben wird, zu welchen Zeitpunkten eintreffende Nachrichten TT-Nachrichten sind.

Dabei unterscheidet der Sternkoppler zwischen TT-Nachrichten und ET-Nachrichten und transportiert die TT-Nachrichten mit einer a priori bekannten konstanten Verzögerungszeit, und bei einem zeitlichen Konflikt zwischen ET- und TT-Nachrichten bricht er den Transport der in Konflikt stehenden ET-Nachricht ab, um die TT-Nachricht mit der konstanten Verzögerungszeit transportieren zu können.

Dabei ist dann vorgesehen, dass der Sternkoppler nach der zeitgerechten Übertragung einer TT-Nachricht die in Konflikt gestandene abgebrochene ET-Nachricht erneut sendet.

Weiters kann vorgesehen sein, dass der Sternkoppler seine lokale Uhr unter Nutzung des in einer TT-Nachricht enthaltenen Zeitfeldes synchronisiert.

Besonders günstig ist es dabei, wenn der Sternkoppler seine lokale Uhr unter Nutzung der in mehreren TT-Nachrichten enthaltenen Zeitfelder fehlertolerant synchronisiert.

Zusätzlich kann vorgesehen sein, dass der Sternkoppler über einen dedizierten unidirektionalen Kanal, auf dem alle TT-Nachrichten, die der Sternkoppler transportiert, ausgegeben werden, mit den replizierten Sternkopplern innerhalb eines Clusters von Knotenrechnern verbunden ist.

Zusätzlich ist es dann noch möglich, dass der Sternkoppler bei jeder TT-Nachricht auf der Basis seiner lokalen Zeit überprüft, ob die TT-Nachricht innerhalb eines a priori bekannten Zeitfensters um den in der Nachricht enthaltenen Sendezeitpunkt ankommt, und der Sternkoppler bei verfrühtem oder verspätetem Eintreffen einer TT-Nachricht die Nachricht so verstümmelt, dass alle korrekten Empfänger die Nachricht als fehlerhaft erkennen.

Der Sternkoppler dekodiert jede TT-Nachricht und kodiert diese auf der Basis seines lokalen Zeitgebers erneut.

Der Sternkoppler liest ein oder mehrere ausgewählte Felder von TT-Nachrichten und überprüft während der Verzögerungszeit, ob der Inhalt dieser Felder mit bekannten Kriterien, die dem Sternkoppler über eine Konfigurationsnachricht a priori mitgeteilt wurden, übereinstimmt. Falls eine Übereinstimmung nicht gegeben ist, wird die Nachricht so verstümmelt, dass alle korrekten Empfänger die Nachricht als fehlerhaft erkennen.

Außerdem ist erfindungsgemäß noch vorgesehen, dass der Kommunikationskontroller seine lokale Uhr unter Nutzung des in einer TT-Nachrichten enthaltenen Zeitfeldes synchronisiert.

Der Kommunikationskontroller synchronisiert seine lokale Uhr unter Nutzung der in mehreren TT-Nachrichten enthaltenen Zeitfelder fehlertolerant.

Außerdem sendet der Kommunikationskontroller eine von einer auf einem Knotenrechner ausgeführten Applikation übernommene TT-Nachricht autonom, sobald der in der Nachricht im Zeitfeld angegebene Sendezeitpunkt erreicht wird.

Weiters ist vorgesehen, dass der Kommunikationskontroller zwischen ET- und TT-Nachrichten unterscheidet und der Kommunikationskontroller die ET-Nachrichten entsprechend der Ereignissemantik an die lokale Applikationssoftware anbietet, wobei eine neue Nachricht in eine Warteschlange eingereiht wird, aus der von der Applikationssoftware konsumierend gelesen wird, und der Kommunikationskontroller TT-Nachrichten entsprechend der Zustandssemantik an die lokale Applikationssoftware anbietet, wobei eine neue Nachricht die alte Version der Nachricht ersetzt und das Lesen durch die lokale Applikationssoftware nicht konsumierend erfolgt.

Schließlich verfügt der Kommunikationskontroller über zwei oder mehr unabhängige Kommunikationskanäle, auf denen identische Kopien einer TT-Nachricht angeboten werden, und der einen Kommunikationsvorgang als erfolgreich betrachtet, wenn auf mindestens einem dieser redundanten Kanäle eine gültige TT-Nachricht rechtzeitig eintrifft.

Im Folgenden ist die Erfindung an Hand der Zeichnung näher erläutert. In dieser zeigt
- Fig. 1: die Struktur eines verteilten Computersystems mit einem Sternkoppler,
- Fig. 2: die Struktur eines verteilten Computersystems mit zwei Sternkoppler,
- Fig. 3: den Aufbau einer standardisierten normalen Ethernet Nachricht,
- Fig. 4: den Aufbau einer standardisierten erweiterten Ethernet Nachricht,
- Fig. 5: den Aufbau einer TT-Ethernet Nachricht, und
- Fig. 6: die Bitfelder eines TT-Parameterfeldes der TT-Ethernet-Nachricht.

Im Folgenden wird eine Realisierung des neuen Verfahrens an einem möglichen Beispiel mit vier Knotenrechnern, die über einen oder zwei replizierte Sternkoppler verbunden sind, gezeigt.

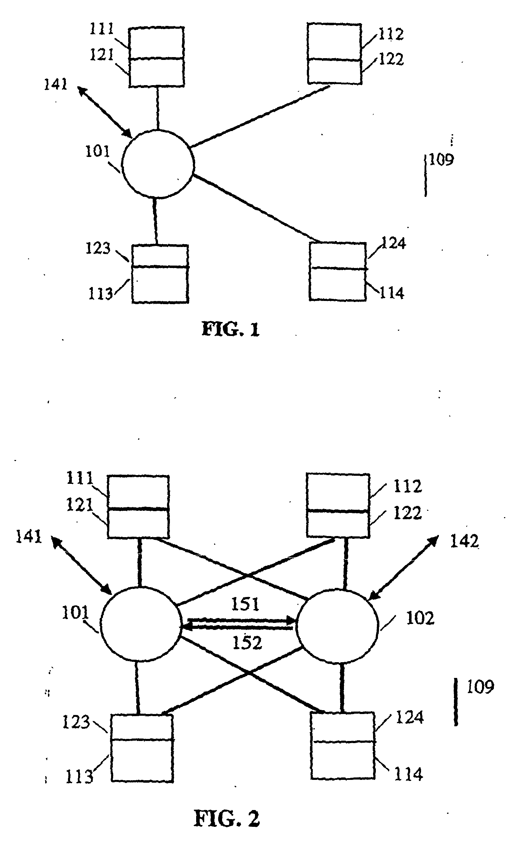

Fig. 1 zeigt ein verteiltes Computersystem mit einem Sternkoppler. Es besteht aus den vier Knotenrechner 111, 112, 113, und 114, die über je einen Kommunikationskontroller 121, 122, 123, und 124 mit je einem bidirektionalen Kommunikationskanalanschluss verfügen, und die über ein Kommunilcationssystem bestehend aus einem Kommunikationskanal 109 verbunden sind. In diesem Kommunikationskanal befindet sich ein intelligenter Sternkoppler 101 zur zentralen Steuerung der Kommunikation. Der Sternkoppler 101 kann über einen optionalen getrennten Kommunikationskanal 141 initialisiert und beobachtet werden.

Fig. 2 zeigt ein verteiltes fehlertolerantes Computersystem mit zwei Sternkopplern. Es besteht aus den vier Knotenrechner 111, 112, 113, und 114, die über je einen Kommunikationskontroller 121, 122, 123, und 124 mit je zwei bidirektionalen Kommunikationskanalanschlüssen verfügen. Jeder dieser Kommunikationskanalanschlüsse ist mit je einem intelligenten Sternkoppler 101 und 102 verbunden, die die zentrale Steuerung der Kommunikation vornehmen. Der Sternkoppler 101 kann seine Nachrichten über Kanal 151 an den Sternkoppler 102 senden und kann über den getrennten Kommunikationskanal 141 initialisiert und beobachtet werden. Der Sternkoppler 102 kann seine Nachrichten über Kanal 152 an den Sternkoppler 101 senden und kann über den getrennten Kommunikationskanal 142 initialisiert und beobachtet werden.

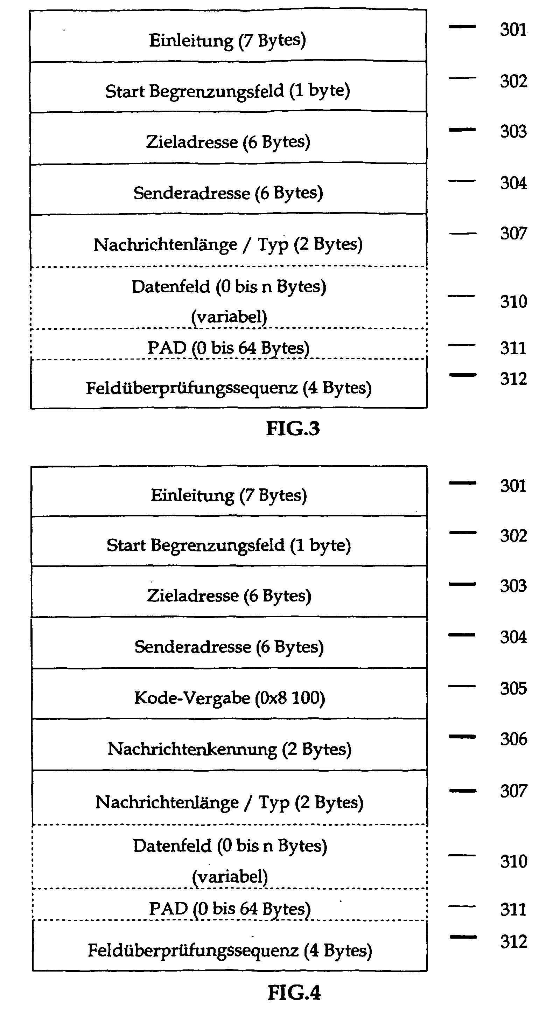

Fig. 3 zeigt den Aufbau einer entsprechend [8] standardisierten normaler Ethernet Nachricht. Nach einer Preamble 301 mit einer Länge von 7 Bytes befindet sich das Start Delimiter Feld 302, die Zieladresse 303, die Senderadresse 304, die Nachrichtenlänge bzw. der Type der Nachricht 307, das variable Datenfeld 310, das optionale PAD Feld 311, mit dem kurze Nachrichten verlängert werden, und die Frame-Check Sequence 312.

Fig. 4 zeigt den Aufbau einer entsprechend [8] standardisierten erweiterten Ethernet Nachricht. In Ergänzung zu den in Fig. 3 beschriebenen Feldern findet sich in Feld 305 eine Kennung für die erweiterte Nachricht und im Feld 306 ein Tag-Type Feld. In diesem Tag-Type Feld kann der Benutzer die Priorität einer Nachricht festlegen. Die höchste Priorität kann entsprechend dieser Erfindung zur Kennung einer TT-Nachricht verwendet werden. Eine solche Kennung ist konform zum Ethernet Standard [8]. Es sei darauf hingewiesen, dass im Ethernet Standard die Kodevergabe für das Feld 305 noch nicht voll ausgeschöpft ist und daher auch dieses Feld für die Kennung einer TT-Nachricht herangezogen werden könnte.

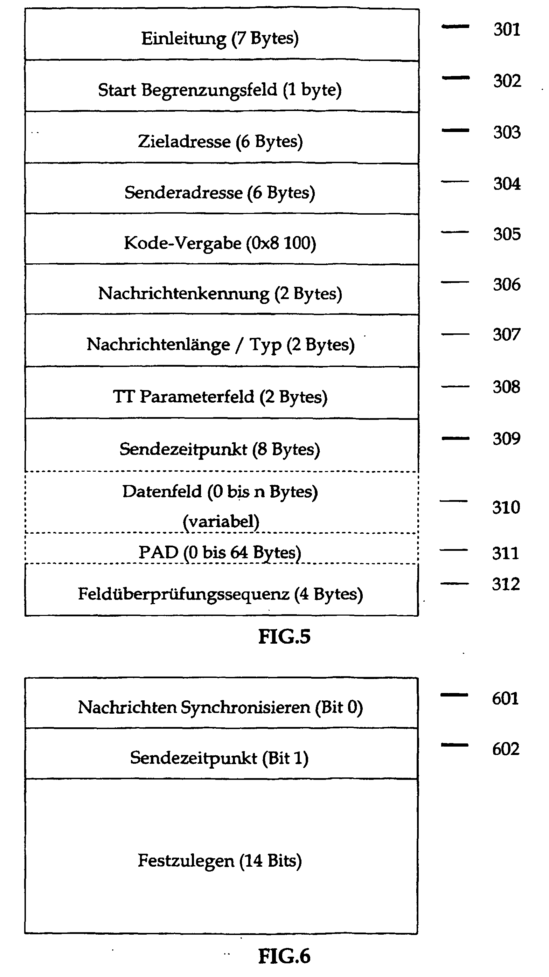

Fig. 5 zeigt den Aufbau einer TT-Ethernet Nachricht. Zusätzlich zu den in Fig. 4 beschriebenen Feldern wird im Feld 308 ein TT-Parameterfeld eingeführt und in Feld 309 der optionale Sendezeitpunkt der TT-Nachricht angegeben. Ein am Markt verfügbarer standardisierter Ethernet Kontroller sieht in den Feldern 308 und 309 benutzerspezifische Datenfelder. Im TT-Parameterfeld 308 befinden sich Informationen betreffend die Struktur und den Typ der TT-Nachricht.

Fig. 6 zeigt den Inhalt der Bitfelder des TT-Parameterfeldes 308. Ist das Bit in Feld 601 (loworder bit) gesetzt, so bedeutet dies, dass in der TT-Nachricht der Sendezeitpunkt in Feld 309 enthalten ist. Ist das Bit in Feld 602 gesetzt, so bedeutet, dies dass die Nachricht von einem Sender mit einer präzisen Uhrzeit kommt und zur Uhrensynchronisation herangezogen werden darf.

Wenn ein Knotenrechner, z.B. 111, eine TT-Nachricht senden will, so setzt er im Nachrichtenfeld 306 die Kennung für eine TT-Nachricht und sendet die Nachricht. Alternativ kann die auf einem Knotenrechner ablaufenden Applikationssoftware das Bit 601 in der Nachricht setzen und den gewünschten Sendezeitpunkt in das Feld 309 der Nachricht schreiben. Der Sendestart kann dann autonom durch einen erfindungsgemäß erweiterten Ethernet Kommunikationskontroller präzise zum festgelegten Sendezeitpunkt 309 erfolgen. Wenn der Sender das Bit 602 der Nachricht setzt, dann beinhaltet die Nachricht eine besonders präzise Zeitangabe, die für die Uhrensynchronisation der anderen Kontroller herangezogen werden kann.

Der Sternkoppler analysiert eine ankommende Nachricht und stellt an Hand von Feld 306 fest, ob eine TT-Nachricht oder eine ET-Nachricht ankommt. Im Falle einer TT-Nachricht bestimmt der Sternkoppler auf der Basis des Feldes 303 den gewünschten Ausgabekanal, z.B. zu Knoten 114 in Fig. 1. Wenn auf diesem Kanal gerade eine ET-Nachricht gesendet wird, so bricht der Sternkoppler diesen Sendevorgang sofort ab und macht den Kanal zu Knoten 114 innerhalb einer bekannten konstanten Verzögerungszeit Δ für den Weitertransport der gerade ankommende TT-Nachricht frei. Die Verzögerungszeit Δ muss so lange gewählt werden, dass in jedem Fall der Ausgangskanal innerhalb dieser Verzögerungszeit Δ für den Transport der TT-Nachricht freigemacht werden kann. Im Rahmen einer a priori Planung der TT-Kommunikation muss sichergestellt sein, dass der Abstand zwischen aufeinanderfolgenden TT-Nachrichten größer ist als die Verzögerungszeit Δ. Im Einzelfall hält der Sternkoppler diese konstante Verzögerungszeit Δ zwischen dem Beginn des Empfanges einer TT-Nachricht und dem Beginn des Sendens einer TT-Nachricht präzise ein. Wenn der Sternkoppler den Transport einer in Konflikt stehenden ET-Nachricht abgebrochen hat, so kann er nach dem zeitgerechten Transport der TT-Nachricht die abgebrochene ET-Nachricht erneut senden. Der Sternkoppler kann auch Guardian Funktionen, wie sie in [4] beschrieben sind, übernehmen um fehlerhafte Nachrichten zu erkennen und zu isolieren und so die Ausbreitung von Fehlern zu verhindern. Wenn eine TT-Nachricht im Feld 309 den Sendezeitpunkt erhält, so kann der Sternkoppler überprüfen, ob die Nachricht entsprechend [6] innerhalb eines bekannten Toleranzintervalls um den Sendezeitpunkt ankommt und die Nachricht verwerfen, wenn dies nicht der Fall ist. Alternativ kann dem Sternkoppler über eine a priori übermittelte Konfigurationsnachricht über Kanal 141 mitgeteilt werden, auf welchen Eingangskanälen zu welchen Zeitpunkten TT-Nachrichten erwartet werden. Diese Informationsredundanz verhindert in einem fehlertoleranten System, dass ein fehlerhafter Rechnerknoten eine falsche Sendezeit in die Nachricht einträgt. Da der Sternkoppler die Nachricht auf der Basis seines eigenen Oszillators und seiner eigenen Stromversorgung am Ausgang kodiert, wird die Weiterleitung eines SOS Fehlers vom Sender an die Empfänger unterbunden [4]. Der Sternkoppler kann seine lokale Uhr initial synchronisieren, indem er den Beginn des Eintreffens einer TT-Nachricht misst und seine Uhr so einstellt, dass sie zu diesem Eintreffenszeitpunkt den Wert der in der Nachricht enthaltenen globalen Zeit 309 angenommen hätte [5].

Eine kontinuierliche fehlertolerante Uhrensynchronisation kann wie folgt realisiert werden: der Sternkoppler bestimmt bei jeder in Feld 602 markierten Synchronisationsnachricht das Intervall zwischen dem mit seiner lokalen Uhr gemessenen Eintreffenszeitpunkt der Synchronisationsnachricht und dem im Feld 309 der Nachricht enthaltenen Sendezeitpunkt [5]. Dieses Intervall ist ein Maß für die Abweichung der Uhr des Empfängers von der Uhr des Senders. Wenn eine Anzahl von solchen Messungen vorliegt, so kann mit einem bekannten fehlertoleranten Synchronisationsalgorithmus, wie in [9] auf S. 61. beschrieben, der Korrekturfaktur für die Uhr des Sternkopplers errechnet werden. Ein solches fehlertolerantes Synchronisationsverfahren kann auch in der Hardware des Stemkopplers realisiert werden [1]. In einem fehlertoleranten System [2,3], in dem replizierte Kommunikationskanäle entsprechend Fig. 2 vorhanden sind, kann jeder Sternkoppler über einen dedizierten Verbindungskanal (151 für Sternkoppler 101 und 152 für Sternkoppler 102) alle TT-Nachrichten an den anderen Sternkoppler senden, damit dieser auch seine Uhr synchronisieren kann, wenn am eigenen Eingang keine Nachricht ankommt. In einem fehlertoleranten System kann der Sternkoppler innerhalb der Verzögerungszeit Δ den Inhalt des Datenfeldes 310 der Nachricht entsprechend ihm über eine Konfigurationsnachricht bekannt gegebenen Kriterien überprüfen, um Datenfehler des Senders zu erkennen. Eine als fehlerhaft erkannte Nachricht wird vom Sternkoppler nicht weitergeleitet.

Wenn ein empfangender Kommunikationskontroller im Feld 309 der eintreffenden TT-Nachricht den Sendezeitpunkt vorfindet, so kann er seine lokale Uhr initial synchronisieren, indem er den Beginn des Eintreffens dieser Nachricht misst, und seine Uhr so einstellt, dass sie zu diesem Eintreffenszeitpunkt den Wert der in der Nachricht enthaltenen globalen Zeit 309 plus dem konstanten vom Sternkoppler verursachten Verzögerungsintervall Δ angenommen hätte [5]. Eine kontinuierliche fehlertolerante Uhrensynchronisation kann wie folgt realisiert werden: der Kommunikationskontroller bestimmt bei jeder in Feld 602 markierten Synchronisationsnachricht das Intervall zwischen den mit seiner lokalen Uhr gemessenen Eintreffenszeitpunkt der Synchronisationsnachricht und dem im Feld 309 der Nachricht enthaltenen Sendezeitpunkt. Er verkürzt dieses Intervall um das bekannte Verzögerungsintervall Δ des Sternkopplers. Dieses verkürzte Intervall ist ein Maß für die Abweichung der Uhr des Empfängers von der Uhr des Senders. Wenn eine Anzahl von solchen Messungen vorliegt, so kann mit einem bekannten fehlertoleranter Synchronisationsalgorithmus, wie in [9] auf S. 61. beschrieben, der Korrekturfaktur für die Uhr des Empfängers errechnet werden. Ein solches fehlertolerantes Synchronisationsverfahren kann auch in der Hardware des empfangenden Kommunikationskontrollers realisiert werden [1]. Wenn die Applikationssoftware eines Rechnerknotens, z.B. 111, in das Nachrichtenfeld 309 den beabsichtigten Sendezeitpunkt der Nachricht einträgt, so kann ein erfindungsgemäß erweiterter Kommunikationskontroller den Beginn des Sendens autonom zum präzis richtigen Sendezeitpunkt veranlassen [2,3]. An der Schnittstelle zwischen dem empfangenden Kommunikationskontroller, z.B. 121 und der Applikationssoftware kann ein erfindungsgemäß erweiterter Kommunikationskontroller ET-Nachrichten und TT-Nachrichten unterschiedlich anbieten. ET-Nachrichten beinhalten normalerweise Informationen über Ereignisse und müssen nach der Ereignissemantik bearbeitet werden[7]. Die Ereignissemantik verlangt, dass eintreffende Nachrichten in einer Warteschlange zwischengespeichert werden und exakt einmal an den Benutzerprozess übergeben werden. TT-Nachrichten beinhalten normalerweise Zustandsdaten, die entsprechend der Zustandssemantik in einem gemeinsamen Speicher angeboten werden können. Das Eintreffen einer neuen TT-Nachricht überschreibt den Speicherwert einer älteren TT-Nachricht gleichen Namens. Der empfangende Prozess liest Zustandsdaten nicht konsumierend. In einem fehlertoleranten System, das über mehrere unabhängige Kommunikationskanäle verfügt, z.B. über zwei Kanäle wie in Fig. 2, werden Nachrichten repliziert gesendet. In einem solchen System ist die Kommunikation erfolgreich, wenn mindestens eine der replizierten Nachrichtenkopien beim Empfänger ankommt.

Abschließend sei festgehalten, dass die vorab beschriebene konkrete Implementierung der Integration von zeitgesteuerten und ereignisgesteuerten Nachrichten im Ethernet nur eine von vielen möglichen Implementierungsvarianten der vorliegenden Erfindung darstellt. Zum Beispiel ist es möglich, die Entscheidung, ob eine beim Sternkoppler ankommende Nachricht eine TT-Nachricht ist, nicht vom Nachrichteninhalt in Feld 306 oder in Feld 305 sondern vom Zeitpunkt des Eintreffens einer Nachricht beim Sternkoppler abzuleiten. In einem solchen Fall muss dem Sternkoppler a priori über eine Konfigurationsnachricht bekannt gegeben werden, wann und auf welchem Kanal eine TT-Nachricht zu erwarten ist. Das gleiche gilt für die Kommunikationskontroller.

Es ist ein wesentliches Charakteristikum dieser Erfindung, dass bestehende handelsübliche Ethernet Controller ohne Veränderung zeitgesteuerte Nachrichten senden und empfangen können.

## Patentansprüche

1. Kommunikationsverfahren zur Übertragung von Ethernet-Nachrichten in einem verbeilten Echtzeitsystem, in dem eine Vielzahl von Knotenrechnern, z.B. vier Knotenrechner (111, 112, 113, 114), die über mindestens je einen Kommunikationskontroller (121, 122, 123, 124) verfügen, über ein Kommunikationssystem bestehend aus einem oder mehreren Kommunikationskanälen (109) verbunden sind, wobei in jedem Kommunikationskanal ein oder mehrere intelligente Sternkoppler (101, 102) angeordnet sind, und wobei zwischen herkömmlichen Ethernet-Nachrichten, die als ET-Nachrichten bezeichnet werden, und zeitgesteuerten Ethernet-Nachrichten, die als TT-Nachrichten bezeichnet werden, unterschieden wird, und die TT-Nachrichten mit einer a priori bekannten konstanten Verzögerungszeit (Δ) zwischen Sender und Empfänger transportiert werden, **dadurch gekennzeichnet, dass**
bei einem zeitlichen Konflikt zwischen ET- und TT-Nachrichten der Transport der in Konflikt stehenden ET-Nachricht abgebrochen wird, um die TT-Nachricht mit der konstanten Verzögerungszeit (Δ) transportieren zu können.

2. Kommunikationsverfahren nach Anspruch 1, **dadurch gekennzeichnet, dass** die konstante Verzögerungszeit (Δ) so gewählt wird, dass innerhalb dieser Verzögerungszeit (Δ) die Ausgangskanäle des Stemkopplers (101, 102) für den Transport der eintreffenden TT-Nachricht frei gemacht werden können.

3. Kommunikationsverfahren nach Anspruch 1 oder 2, **dadurch gekennzeichnet, dass** in einem ausgezeichneten Feld der Nachricht **gekennzeichnet** wird, ob die Nachricht eine TT-Nachricht oder eine ET-Nachricht ist.

4. Kommunikationsverfahren nach einem der Ansprüche 1 bis 3, **dadurch gekennzeichnet, dass** mittels eines in einer TT-Nachricht enthaltenen optionalen Zeitfeldes (309) der Sendezeitpunkt der Nachricht angegeben wird.

5. Kommunikationsverfahren nach einem der Ansprüche 1 bis 4, **dadurch gekennzeichnet, dass** durch eine a priori Planung festgelegt wird, dass zwischen dem Transport von zwei TT-Nachrichten ein zeitlicher Abstand von mindestens der konstanten Verzögerungszeit (Δ) eingehalten wird.

6. Sternkoppler für ein Kommunikationssystem zur Übertragung von Ethernet-Nachrichten in einem verteilten Echtzeisystem umfassend eine Vielzahl von Knotenrechnem, z.B. vier Knotenrechner (111, 112, 113, 114), die über mindestens je einen Kommunikationskontroller (121, 122, 123, 124) verfügen, wobei das Kommunikationssystem aus einem oder mehreren Kommunikationskanälen (109) besteht, über welche die Knotenrechner (111, 112,113, 114) miteinander verbunden sind, und wobei in jedem Kommunikationskanal ein oder mehrere intelligente Sternkoppler (101, 102) angeordnet sind,
**dadurch gekennzeichnet, dass**
er dazu eingerichtet ist, zwischen herkömmlichen Ethernet-Nachrichten, die als ET-Nachrichten bezeichnet werden, und zeitgesteuerten Ethernet-Nachrichten, die als TT-Nachrichten bezeichnet werden, zu unterscheiden, und
die TT-Nachrichten mit einer a priori bekannten konstanten Verzögerungszeit (Δ) zwischen Sender und Empfänger zu transportieren,
wobei bei einem zeitlichen Konflikt zwischen ET- und TT-Nachrichten der Transport der in Konflikt stehenden ET-Nachricht abgebrochen wird, um die TT-Nachricht mit der konstanten Verzögerungszeit (Δ) transportieren zu können.

7. Sternkoppler nach Anspruch 6, **dadurch gekennzeichnet, dass** die konstante Verzögerungszeit (Δ) so gewählt ist, dass innerhalb dieser Verzögerungszeit (Δ) die Ausgangskanäle des Sternkopplers (101, 102) für den Transport der eintreffenden TT-Nachricht frei gemacht werden können.

8. Sternkoppler nach Anspruch 6 oder 7, **dadurch gekennzeichnet, dass** in einem ausgezeichneten Feld der Nachricht **gekennzeichnet** ist, ob die Nachricht eine TT-Nachricht oder eine ET-Nachricht ist.

9. Sternkoppler nach einem der Ansprüche 6 bis 8, **dadurch gekennzeichnet, dass** in einer TT-Nachricht ein optionales Zeitfeld (309) enthalten ist, das den Sendezeitpunkt der Nachricht angibt.

10. Sternkoppler nach einem der Ansprüche 6 bis 9, **dadurch gekennzeichnet, dass** durch eine a priori Planung festgelegt ist, dass zwischen dem Transport von zwei TT-Nachrichten ein zeitlicher Abstand von mindestens der konstanten Verzögerungszeit (Δ) eingehalten wird.

11. Sternkoppler nach einem der Ansprüche 6 bis 10, **dadurch gekennzeichnet, dass** dem Sternkoppler über eine Konfigurationsnachricht bekannt geben wird, zu welchen Zeitpunkten eintreffende Nachrichten TT-Nachrichten sind.

12. Sternkoppler nach einem der Ansprüche 6 bis 11, **dadurch gekennzeichnet, dass** er zwischen TT-Nachrichten und ET-Nachrichten unterscheidet und die TT-Nachrichten mit einer a priori bekannten konstanten Verzögerungszeit (Δ) transportiert, und bei einem zeitlichen Konflikt zwischen ET- und TT-Nachrichten den Transport der in Konflikt stehenden ET-Nachricht abbricht, um die TT-Nachricht mit der konstanten Verzögerungszeit (Δ) transportieren zu können.

13. Sternkoppler nach einem der Ansprüche 6 bis 12, **dadurch gekennzeichnet, dass** er nach der zeitgerechten Übertragung einer TT-Nachricht die in Konflikt gestandene abgebrochene ET-Nachricht erneut sendet.

14. Sternkoppler nach einem der Ansprüche 6 bis 13, **dadurch gekennzeichnet, dass** Sternkoppler seine lokale Uhr unter Nutzung des in einer TT-Nachricht enthaltenen Zeitfeldes (309) synchronisiert.

15. Sternkoppler nach einem der Ansprüche 6 bis 14, **dadurch gekennzeichnet, dass** er seine lokale Uhr unter Nutzung der in mehreren TT-Nachrichten enthaltenen Zeitfelder (309) fehlertolerant synchronisiert.

16. Sternkoppler nach einem der Ansprüche 6 bis 15, **dadurch gekennzeichnet, dass** er über einen dedizierten unidirektionalen Kanal (151), auf dem alle TT-Nachrichten, die der Sternkoppler transportiert, ausgegeben werden, mit den replizierten Stemkopplern innerhalb eines Clusters von Knotenrechnern verbunden ist.

17. Sternkoppler nach einem der Ansprüche 6 bis 16, **dadurch gekennzeichnet, dass** er bei jeder TT-Nachricht auf der Basis seiner lokalen Zeit überprüft, ob die TT-Nachricht innerhalb eines a priori bekannten Zeitfensters um den in der Nachricht enthaltenen Sendezeitpunkt (309) ankommt, und der bei verfrühtem oder verspätetem Eintreffen einer TT-Nachricht die Nachricht so verstümmelt, dass alle korrekten Empfänger die Nachricht als fehlerhaft erkennen.

18. Sternkoppler nach einem der Ansprüche 6 bis 17, **dadurch gekennzeichnet, dass** er jede TT-Nachricht dekodiert und auf der Basis seines lokalen Zeitgebers erneut kodiert.

19. Sternkoppler nach einem der Ansprüche 6 bis 18, **dadurch gekennzeichnet, dass** er ein oder mehrere ausgewählte Felder von TT-Nachrichten liest und während der Verzögerungszeit (Δ) überprüft, ob der Inhalt dieser Felder mit bekannten Kriterien, die dem Sternkoppler über eine Konfigurationsnachricht a priori mitgeteilt wurden, übereinstimmt, und der, falls eine Übereinstimmung nicht gegeben ist, die Nachricht so verstümmelt, dass alle korrekten Empfänger die Nachricht als fehlerhaft erkennen.

20. Kommunikationssystem zur Übertragung von Ethernet-Nachrichten in einem verteilten Echtzeitsystem umfassend eine Vielzahl von Knotenrechnern, z.B. vier Knotenrechner (111, 112, 113, 114), die über mindestens je einen Kommunikationskontroller (121, 122, 123, 124) verfügen, wobei das Kommunikationssystem aus einem oder mehreren Kommunikationskanälen (109) besteht, über welche die Knotenrechner (111, 112,113, 114) miteinander verbunden sind, und wobei in jedem Kommunikationskanal ein oder mehrere intelligente Sternkoppler (101, 102) angeordnet sind, **gekennzeichnet durch** eine Sternkoppler nach einem der Ansprüche 6 bis 19.

21. Kommunikationssystem nach einem der Ansprüche 6 bis 20, **dadurch gekennzeichnet, dass** der Kommunikationskontroller seine lokale Uhr unter Nutzung des in einer TT-Nachrichten enthaltenen Zeitfeldes (309) synchronisiert.

22. Kommunikationssystem nach einem der Ansprüche 6 bis 21, **dadurch gekennzeichnet, dass** der Kommunikationskontroller seine lokale Uhr unter Nutzung der in mehreren TT-Nachrichten enthaltenen Zeitfelder (309) fehlertolerant synchronisiert.

23. Kommunikationssystem nach einem der Ansprüche 6 bis 22, **dadurch gekennzeichnet, dass** der Kommunikationskontroller eine von einer auf einem Knotenrechner ablaufenden Applikation übernommene TT-Nachricht autonom sendet, sobald der in der Nachricht im Zeitfeld (309) angegebene Sendezeitpunkt erreicht wird.

24. Kommunikationssystem nach einem der Ansprüche 6 bis 23, **dadurch gekennzeichnet, dass** der Kommunikationskontroller zwischen ET- und TT-Nachrichten unterscheidet und der Kommunikationskontroller die ET-Nachrichten entsprechend der Ereignissemantik an die lokale Applikationssoftware anbietet, wobei eine neue Nachricht in eine Warteschlange eingereiht wird, aus der von der Applikationssoftware konsumierend gelesen wird, und der Kommunikationskontroller TT-Nachrichten entsprechend der Zustandssemantik an die lokale Applikationssoftware anbietet, wobei eine neue Nachricht die alte Version der Nachricht ersetzt und das Lesen durch die lokale Applikationssoftware nicht konsumierend erfolgt.

25. Kommunikationssystem nach einem der Ansprüche 6 bis 24, **dadurch gekennzeichnet, dass** der Kommunikationskontroller über zwei oder mehr unabhängige Kommunikationskanäle verfügt, auf denen identische Kopien einer TT-Nachricht angeboten werden, und der einen Kommunikationsvorgang als erfolgreich betrachtet, wenn auf mindestens einem dieser redundanten Kanäle eine gültige TT-Nachricht rechtzeitig eintrifft.

## Claims

1. A communication method for the transmission of Ethernet messages in a distributed real-time system in which a plurality of network node computers, e.g. four network node computers (111, 112, 113, 114), each of which comprises at least one communication controller (121,122, 123, 124), are connected via a communication system that comprises one or more communication channels (109), one or more intelligent star couplers (101, 102) being disposed in each communication channel, a distinction is made between conventional Ethernet messages, indicated as ET-messages, and time-triggered messages, indicated as TT-messages, and the TT-messages are transported with an a priori known constant delay time (Δ) between transmitter and receiver, wherein, in case of a time conflict between ET and TT-messages, the transport of the ET-message that is in conflict is aborted in order to be able to transport the TT-message with the constant delay time (Δ).

2. The communication method as described in Claim 1, wherein the constant delay time (Δ) is selected in such a manner that within this delay time (Δ) the output channels of the star coupler (101, 102) for the transport of the incoming TT-message can be cleared.

3. The communication method as described in Claim 1 or 2, wherein in an outstanding field of the message a designation is made of whether the message is a TT or an ET-message.

4. The communication method as described in one of Claims 1 to 3, wherein an optional time field (309) that indicates the transmission instant of the message is contained in a TT-message.

5. The communication method as described in one of Claims 1 to 4, wherein it is determined via an a priori planning that a time interval of at least the constant delay time (Δ) between the transport of two TT-messages is observed.

6. A star coupler for a communication system for the transmission of Ethernet messages in a distributed real-time system comprising a plurality of network node computers, e.g. four network node computers (111, 112, 113, 114), each of which comprises at least one communication controller (121, 122, 123, 124), the communication system comprising one or more communication channels (109) via which the network node computers (111, 112, 113, 114) are connected to each other, and one or more intelligent star couplers (101, 102) being disposed within each communication channel, wherein it is equipped to distinguish between conventional Ethemet-messages, indicated as ET-messages and time-triggered Ethernet messages, indicated as TT-messages and to transport the TT-messages having an a priori known constant delay time (Δ) between transporter and receiver, whereby, in case of a time conflict between ET and TT-messages, the ET-message in conflict is aborted in order to be able to transport the TT-message with the constant delay time (Δ).

7. The star coupler as described in Claim 6, wherein the constant delay time (Δ) is selected in such a way that within this delay time (Δ) the output channels of the star coupler (101,102) can be cleared for the transport of the incoming TT-message.

8. The star coupler as described in Claim 6 or 7, wherein, in an indicated field of the message, a designation is made of whether the message is a TT-message or an ET-message.

9. The star coupler as described in one of Claims 6 to 8, wherein an optional time field (309) that indicates the transmission instant of the message is contained in a TT-message.

10. The star coupler as described in one of Clams 6 to 9, wherein it is determined via an a priori planning that a time interval of at least the constant delay time (Δ) between the transport of two TT-messages is observed.

11. The star coupler as described in one of Claims 6 to 10, wherein the instants at which incoming messages are TT-messages are reported to the star coupler via a configuration message.

12. The star coupler as described in one of Claims 6 to 11, wherein it distinguishes between TT-messages and ET-messages and transports the TT-messages and ET-messages with an a priori known constant delay time (Δ) and, in case of a time conflict between ET- and TT-messages, aborts the transport of the ET-message that is in conflict, in order to be able to transport the TT-messages with the constant delay time (Δ).

13. The star coupler as described in one of Claims 6 to 12, wherein it re-transmits the ET-message that was in conflict and aborted after the on-time transmission of a TT-message.

14. The star coupler as described in one of Claims 6 to 13, wherein star coupler synchronizes its local clock using the time field (309) contained in a TT-message.

15. The star coupler as described in one of Claims 6 to 14, wherein, in a fault-tolerant manner, it synchronizes its local clock using the time fields (309) contained within a plurality of TT-messages.

16. The star coupler as described in one of Claims 6 to 15, wherein it is connected via a dedicated unidirectional channel (151), on which all TT-messages that are transported to the star coupler are output, to the replicated star couplers within a cluster of network node computers.

17. The star coupler as described in one of Claims 6 to 16, wherein, for each TT-message, it checks on the basis of its local time whether the TT-message arrives within an a priori known time window around the transmission instant (309) contained in the message and which, when a TT-message arrives early or late, garbles the message in such a manner that all correct receivers detect the message as faulty.

18. The star coupler as described in one of Claims 6 to 17, wherein it decodes each TT-message and re-codes it on the basis of its local timing module.

19. The star coupler as described in one of Claims 6 to 18, wherein it reads one or more selected fields of TT-messages and checks during the delay time (Δ) whether the content of these fields corresponds to known criteria that were communicated a priori to the star coupler via a configuration message and which, if it does not correspond, garbles the message in such a manner that all correct receivers detect the message as faulty.

20. A communication system for the transmission of Ethernet messages in a distributed real-time system comprising a plurality of network node computers, e.g. four network node computers (111, 112, 113, 114), each of which comprises at least one communication controller (121, 122, 123, 124), the communication system comprising one or more communication channels (109) via which the network node computers (111, 112, 113, 114) are connected to each other, and one or more intelligent star couplers (101,102) being disposed within each communication channel, **characterized by** a star coupler as described in one of Claims 6 to 19.

21. The communication system as described in one of Claims 6 to 20, wherein the communication controller synchronizes its local clock using the time field contained in a TT-message.

22. The communication system as described in one of Claims 6 to 21, wherein the communication controller in fault-tolerant manner synchronizes its local clock using the time fields (309) contained within a plurality of TT-messages.

23. The communication system as described in one of Claims 6 to 22, wherein the communication controller autonomously transmits a TT-message accepted by an application running on a network node computer as soon as the transmission instant indicated in the time field (309) in the message is reached.

24. The communication system as described in one of Claims 6 to 23, wherein the communication controller distinguishes between ET and TT-messages, and the communication controller provides the ET-messages to the local application software corresponding to the event semantics, a new message being placed in a waiting queue from which it is read in a consumptive manner by the application software, and the communication controller provides TT-messages to the local application software corresponding to the status semantics, a new message replacing the old one, and the reading by the local application software occurring in a non-consumptive manner.

25. The communication system as described in one of Claims 6 to 24, wherein the communication controller has two or more communication channels on which identical copies of a TT-message are provided and the one communication operation is considered successful if a valid TT-message is received on time on at least one of these redundant channels.

## Revendications

1. Procédé de communication pour transmettre des messages Ethernet dans un système en temps réel partagé, dans lequel une pluralité d'ordinateurs nodaux, par exemple quatre ordinateurs nodaux (111, 112, 113, 114), disposant respectivement d'un contrôleur de communication (121, 122, 123, 124), sont reliés par un système de communication composé d'un ou plusieurs canaux de communication (109), un ou plusieurs coupleurs en étoile intelligents (101, 102) étant disposés dans chaque canal de communication et une différentiation étant faite entre les messages Ethernet conventionnels, décrits comme des messages ET, et les messages Ethernet temporisés, décrits comme des messages TT, et dans lequel les messages TT sont transportés entre l'émetteur et le destinataire avec temps de retard constant (Δ) connu a priori, **caractérisé en ce que**, en cas de conflit temporel entre les messages ET et TT, le transport du message ET en conflit est interrompu, afin de pouvoir transporter le message TT avec le temps de retard constant (Δ).

2. Procédé de communication selon la revendication 1, **caractérisé en ce que** le temps de retard constant (Δ) est choisi de manière à ce que, en l'espace de ce temps de retard, les canaux de sortie du coupleur en étoile (101, 102) puissent être libérés pour le transport du message TT arrivant.

3. Procédé de communication selon la revendication 1 ou 2, **caractérisé en ce que**, dans un champ balisé du message, on identifie si le message est un message TT ou un message ET.

4. Procédé de communication selon l'une quelconque des revendications 1 à 3, **caractérisé en ce que** le moment d'envoi est indiqué dans un champ de temps (309) optionnel contenu dans un message TT.

5. Procédé de communication selon l'une quelconque des revendications 1 à 4, **caractérisé en ce que** l'on détermine par une planification a priori qu'un écart de temps au moins égal au temps de retard constant (Δ) est maintenu entre le transport de deux messages TT.

6. Coupleur en étoile pour un système de communication pour transmettre des messages Ethernet dans un système en temps réel partagé comprenant une pluralité d'ordinateurs nodaux, par exemple quatre ordinateurs nodaux (111, 112, 113, 114), qui disposent respectivement d'un contrôleur de communication (121, 122, 123, 124), le système de communication étant composé d'un ou plusieurs canaux de communication (109), au moyen desquels les ordinateurs nodaux (111, 112, 113, 114) sont reliés entre eux, et un coupleur en étoile intelligent (101, 102) étant disposé dans chaque canal de communication, **caractérisé en ce qu'**il est installé afin de différencier les messages Ethernet conventionnels, décrits comme des messages ET, et les messages Ethernet temporisés, décrits comme des messages TT, et afin de transporter les messages TT avec un temps de retard constant (Δ) connu a priori entre l'émetteur et le destinataire, le transport du message ET en conflit étant interrompu en cas de conflit de temps entre des messages ET et TT afin de pouvoir transporter le message TT avec le temps de retard constant (Δ).

7. Coupleur en étoile selon la revendication 6, **caractérisé en ce que** le temps de retard constant (Δ) est choisi de manière à ce que, en l'espace de ce temps de retard (Δ), les canaux de sortie du coupleur en étoile (101, 102) puissent être libérés pour le transport du message TT arrivant.

8. Coupleur en étoile selon la revendication 6 ou 7, **caractérisé en ce que**, dans un champ balisé du message, on identifie si le message est un message TT ou un message ET.

9. Coupleur en étoile selon l'une quelconque des revendications 6 à 8, **caractérisé en ce qu'**un champ de temps (309) optionnel, qui indique le moment d'envoi du message, est contenu dans le message TT.

10. Coupleur en étoile selon l'une quelconque des revendications 6 à 9, **caractérisé en ce qu'**on détermine par une planification a priori qu'un écart de temps au moins égal au temps de retard constant (Δ) est maintenu entre le transport de deux messages TT.

11. Coupleur en étoile selon l'une quelconque des revendications 6 à 10, **caractérisé en ce qu'**on indique au coupleur en étoile au moyen d'un message de configuration à quels moments les messages arrivants sont des messages TT.

12. Coupleur en étoile selon l'une quelconque des revendications 6 à 11, **caractérisé en ce qu'**il différencie les messages TT et les messages ET et transporte les messages TT avec un temps de retard constant (Δ) connu a priori et **en ce qu'**il interrompt le transport du message ET en conflit lors d'un conflit entre des messages ET et TT afin de pouvoir transporter le message TT avec le temps de retard constant (Δ).

13. Coupleur en étoile selon l'une quelconque des revendications 6 à 12, **caractérisé en ce qu'**il envoie à nouveau le message ET en conflit interrompu après la transmission en temps d'un message TT.

14. Coupleur en étoile selon l'une quelconque des revendications 6 à 13, **caractérisé en ce que** le coupleur en étoile synchronise son horloge locale en utilisant le champ de temps (309) contenu dans un message TT.

15. Coupleur en étoile selon l'une quelconque des revendications 6 à 14, **caractérisé en ce qu'**il synchronise son horloge locale en utilisant le champ de temps (309) contenu dans plusieurs messages TT.

16. Coupleur en étoile selon l'une quelconque des revendications 6 à 14, **caractérisé en ce qu'**il est relié par un canal dédié unidirectionnel (151), auquel tous les messages TT transportés par le coupleur en étoile sont indiqués, aux coupleurs en étoile répliqués à l'intérieur d'un cluster d'ordinateurs nodaux.

17. Coupleur en étoile selon l'une quelconque des revendications 6 à 16, **caractérisé en ce qu'**il vérifie pour chaque message TT sur la base de son heure locale, si le message TT arrive dans une fenêtre de temps connue a priori proche du moment d'envoi (309) contenu dans le message et qui tronque le message en cas d'arrivée précoce ou retardée d'un message TT de manière à ce que tous les destinataires corrects reconnaissent le message comme défectueux.

18. Coupleur en étoile selon l'une quelconque des revendications 6 à 17, **caractérisé en ce qu'**il décode chaque message TT et le code à nouveau en fonction de son horloge locale.

19. Coupleur en étoile selon l'une quelconque des revendications 6 à 18, **caractérisé en ce qu'**il lit un ou plusieurs champs sélectionnés des messages TT et vérifie au cours du temps de retard (Δ) si le contenu de ces champs correspond à des critères connus, qui ont été partagés avec le coupleur en étoile a priori au moyen d'un message de configuration, et qui, en cas d'absence de correspondance, tronque le message de manière à ce que tous les destinataires corrects reconnaissent le message comme défectueux.

20. Système de communication pour transmettre des messages Ethernet dans un système en temps réel partagé comprenant une pluralité d'ordinateurs nodaux, par exemple quatre ordinateurs nodaux (111, 112, 113, 114), qui disposent respectivement au moins d'un contrôleur de communication (121, 122, 123, 124), le système de communication étant composé d'un ou plusieurs canaux de communication (109), au moyen desquels les ordinateurs nodaux (111, 112, 113, 114) sont reliés entre eux et un ou plusieurs coupleurs en étoile intelligents (101, 102) étant disposés dans chaque canal de communication, **caractérisé par** un coupleur en étoile selon l'une quelconque des revendications 6 à 19.

21. Système de communication selon l'une quelconque des revendications 6 à 20, **caractérisé en ce que** le contrôleur de communication synchronise son horloge locale en utilisant le champ de temps (309) contenu dans un message TT.

22. Système de communication selon l'une quelconque des revendications 6 à 21, **caractérisé en ce que** le contrôleur de communication synchronise avec une tolérance d'erreur son horloge locale en utilisant les champs de temps contenus dans plusieurs messages TT.

23. Système de communication selon l'une quelconque des revendications 6 à 22, **caractérisé en ce que** le contrôleur de communication envoie de manière autonome un message TT pris en charge par une application exécutée sur un ordinateur nodal dès que le moment d'envoi indiqué dans le champ de temps (309) du message est atteint.

24. Système de communication selon l'une quelconque des revendications 6 à 23, **caractérisé en ce que** le contrôleur de communication différencie les messages ET et TT et **en ce que** le contrôleur de communicateur propose les messages ET en fonction de la sémantique événementielle à un logiciel d'application local, un nouveau message, dans lequel le logiciel d'application effectue une lecture complète, étant positionné dans une file d'attente, et **en ce que** le contrôleur de communication propose des messages TT en fonction de la sémantique d'état au logiciel d'application local, un nouveau message remplaçant l'ancienne version du message et la lecture par le logiciel d'application local ne s'effectuant pas intégralement.

25. Système de communication selon l'une quelconque des revendications 6 à 24, **caractérisé en ce que** le contrôleur de communication dispose de deux canaux de communication indépendants ou plus, sur lesquels des copies identiques d'un message TT sont proposées et qui considère un processus de communication comme réussi si un message TT valide arrive en temps par au moins un de ces canaux redondants.
